Europäisches Patentamt

European Patent Office

Office européen des brevets

(11) Publication number: **0 059 073**
**B1**

# (12) EUROPEAN PATENT SPECIFICATION

(45) Date of publication of patent specification: **07.08.85**

(51) Int. Cl.⁴: **B 60 R 1/06**

(21) Application number: **82300825.5**

(22) Date of filing: **18.02.82**

(54) **Electrically-operated mirror angle adjusting device.**

(30) Priority: **24.02.81 JP 24834/81**

(43) Date of publication of application:
**01.09.82 Bulletin 82/35**

(45) Publication of the grant of the patent:
**07.08.85 Bulletin 85/32**

(84) Designated Contracting States:
**DE FR GB**

(56) References cited:
**DE-A-2 840 789**
**DE-B-2 456 457**
**DE-U-7 710 876**
**GB-A-2 032 367**
**US-A-3 609 014**
**US-A-3 972 597**
**US-A-4 056 253**
**US-A-4 171 873**

(73) Proprietor: **MURAKAMI KAIMEIDO CO., LTD**
**12-25, Miyamoto-cho Shizuoka-shi**
**Shizuoka 422 (JP)**

(72) Inventor: **Kumai, Toshiyuki**
**78-4, Hyodayu**
**Fujieda-shi Shizuoka-ken (JP)**

(74) Representative: **McCallum, William Potter et al**
**Cruikshank & Fairweather 19 Royal Exchange**
**Square**
**Glasgow G1 3AE Scotland (GB)**

Courier Press, Leamington Spa, England.

## Description

This invention relates to an electrically operated mirror angle adjusting device for a mirror mounted on a door, a fender or the like, of a motor vehicle.

Devices adapted to control remotely the angle of reflection of a rear-view mirror by means of two actuators are disclosed, for instance, in U.S. Patents —A—3,609,014 and —A—3,972,597. Each of these devices comprises a supporting pivot for the mirror disposed in the centre of an actuator unit housing, and two movable pivots therefor spaced from said supporting pivot and being located respectively on a horizontal axis and a vertical axis, said movable pivots being movable back and forth by their actuators so as to adjust the horizontal angle and vertical angle of the mirror. Although the centre of a spherical bearing for each of said movable pivots actually moves along a circular arc having its centre at the central supporting pivot, each of said movable pivots is adapted to move along a straight line because it is fixed to the output shaft of its actuator or to an externally-threaded rod engaging with the central hole of a worm wheel of the actuator. Therefore, the movable pivots do not follow the movements of their spherical bearings, and smooth operation is not obtained. Furthermore, at the time of assembly, the pivots may not be accurately fitted in their proper positions.

It has also previously been proposed to provide an electric mirror angle adjusting device comprising a pair of pivot screws each being pivotally attached within the central hole of a worm wheel of an actuator, an adjusting nut with a plurality of catches engaging with each pivot screw, and a movable pivot being provided at one end of each adjusting nut, so that each movable pivot not only moves back and forth but also swings conically on the base of its pivot screw as its spherical bearing moves along a circular arc. Therefore, in this device, the angular adjustment of the mirror can be made smoothly, and assembly work is facilitated.

Since each movable pivot is adapted to swing conically on the root of its pivot screw as mentioned above, this device has, at the same time, the disadvantage that the mirror is not firmly held at its adjusted angle and therefore it may be obliquely displaced by the vibration of the motor vehicle.

German Patent Specification No. DE—A1—28 40 789 teaches a cross pin for controlling the inclination of a mirror in the directions of the x-axis and y-axis, said cross pin being disposed between an actuator unit and a mirror holder. German Patent Specification No. DE—B2—24 56 457 teaches a means having the same function as said cross pin and comprising a cross-shaped leaf spring and four pillars respectively inserted into holes near the projecting ends of the leaf spring.

An object of the present invention is to provide an improved construction of electric mirror angle adjusting device which will permit an accurate angular adjustment of the inclination of the mirror about a horizontal and a vertical axis, even when the mirror is subjected to vibrations.

With regard to DE—B2—24 56 457 above which describes already an electric mirror angle adjusting device comprising an actuator unit housing containing an actuator unit including two actuators, a mirror holder pivotally connected adjacent its central portion to said actuator housing, two adjustment members each having a movable pivot, said adjusting members being respectively movable by said actuators so as to adjust the horizontal and vertical angles of a mirror, and guide means for controlling the direction of horizontal and/or vertical inclination of said mirror, the mirror being movable under the control of said guide means about a central pivot mounted in a spherical bearing, the present invention is characterised in that said guide means comprise a cruciform member disposed on said actuator unit housing, having adjacent its centre said spherical bearing into which said supporting pivot is fitted, said cruciform member extending along the horizontal and vertical axes of said mirror and a cruciform groove provided with said supporting pivot on said mirror holder so as to engage with said cruciform member, the outer surface of said spherical bearing being supported by internal abutment members forming an outer bearing in said cruciform groove.

The arrangement of the present invention therefore provides an electric mirror angle adjusting device which firmly holds the mirror at its adjusted angle so as to prevent it from being obliquely displaced by vibration or the like, that is without losing the flexibility of the movement of the movable pivots.

Embodiments of the invention will now be described, by way of example, with reference to the accompanying drawings in which:

Fig. 1 is a partially cutaway front view of a first embodiment of an electrically operated mirror angle adjusting device according to the present invention;

Fig. 2 is a transverse sectional view of the device of Fig. 1;

Fig. 3 is a vertical sectional view of the device of Fig. 1;

Fig. 4 is a front view of an actuator unit housing, the cover portion of which is partially cut away;

Fig. 5 is an enlarged sectional view taken on line V—V of Fig. 4;

Fig. 6 is an enlarged sectional view taken on line VI—VI of Fig. 4;

Fig. 7 is a rear view of a mirror holder;

Fig. 8 is an enlarged sectional view showing a portion of an actuator unit;

Fig. 9 is an enlarged sectional view showing a portion of an actuator unit including a modified adjusting nut;

Fig. 10 is a perspective view showing said modified adjusting nut;

Fig. 11 is a partially cutaway side view of a second embodiment of an electrically-operated mirror angle adjusting device according to the invention;

Fig. 12 is a front view of the mirror of Fig. 11, the central portion of which is cut away to show an actuator unit housing;

Fig. 13 is a partially cutaway front view of the actuator unit housing of Fig. 12;

Fig. 14 is a perspective view of the actuator unit housing of Figs. 12 and 13;

Fig. 15 is an enlarged sectional view showing a portion of the actuator unit of Figs. 12 to 14;

Fig. 16 is a perspective view of an adjusting nut having fins for use in the actuator unit as illustrated in Fig. 15;

Fig. 17 is a diagram showing an example of a driving circuit for an electric motor.

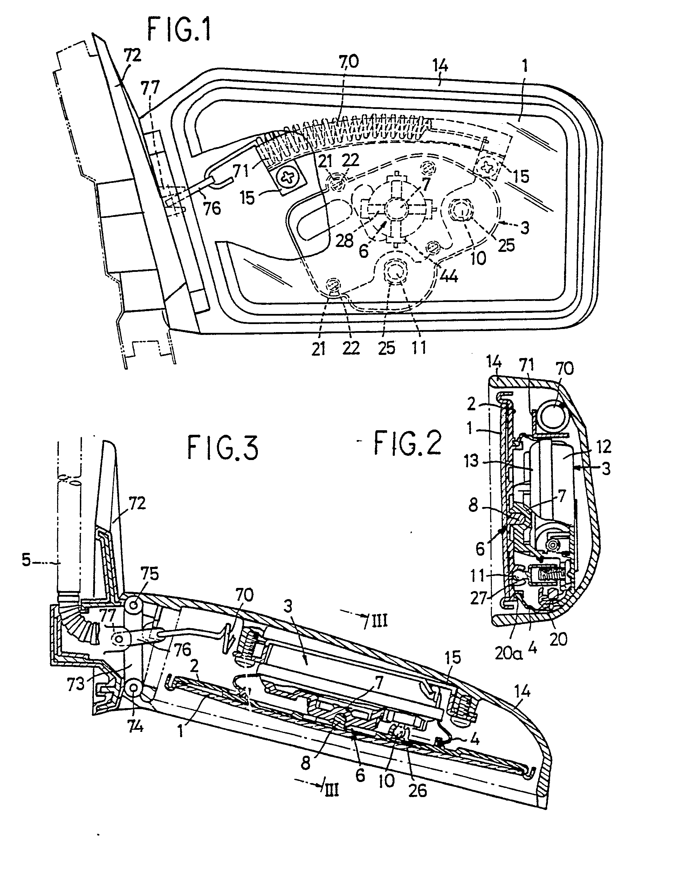

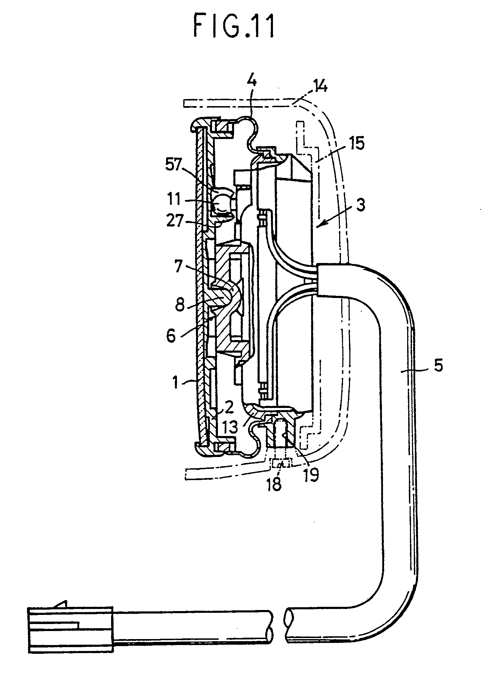

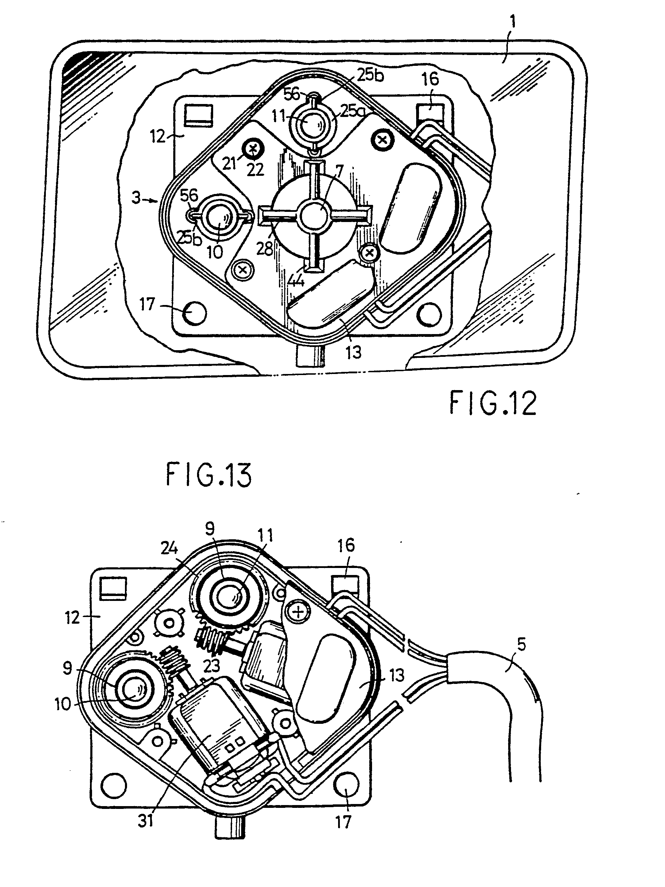

Referring to the drawings, Figs. 1 to 8 illustrate a first embodiment of an electrically-operated mirror adjusting device which includes both a first guide means comprising a cruciform member provided on the front face of an actuator unit housing and a cruciform groove, engageable therewith, provided on a mirror holder, and second guide means comprising openings, longer in the horizontal or vertical direction, into which adjusting nuts with movable pivots are respectively inserted. In the second embodiment shown in Figs. 11 to 16, there is included only the first guide means comprising the cruciform member and the cruciform groove, and the second guide means is not included.

Referring to Figs. 1 to 8 of the drawings, a mirror 1 is mounted in a mirror holder 2. An actuator unit housing 3 contains two actuators and consists of a base portion 12 and a cover portion 13. A flexible seal 4 of a bellows type is disposed between the mirror holder 2 and the sides of the actuator unit housing 3. A cable or harness 5 extends outward from the actuator unit housing 3. A first guide means 6 for controlling the direction of inclination of the mirror 1 comprises, as described in detail below, a cruciform member 28 on the front of the actuator unit housing 3 and a cruciform groove 29 on the mirror holder 2. A spherical bearing 7 is provided in the centre of the cruciform member on the front of the actuator unit housing 3 and a stationary supporting pivot 8 is provided in the centre of the cruciform groove on the mirror holder 2. Two adjusting nuts 9 are located some distance away from the supporting pivot 8 on a horizontal axis and a vertical axis respectively which meet at right angles to each other at the supporting pivot 8. A movable pivot 10 is provided on the end of the adjusting nut 9 on said horizontal axis and another movable pivot 11 is provided on the end of the other adjusting nut 9 on said vertical axis. A mirror body 14 contains the actuator unit housing 3 and the mirror 1. The mirror 1 is supported on the three pivots, that is, the stationary central supporting pivot 8 and the two movable pivots 10, 11. Each of the adjusting nuts 9 with the movable pivots 10, 11 is adapted to be moved back and forth by each of the actuators so as to adjust the horizontal or vertical angle of the mirror 1.

The actuator unit housing 3, consisting of the base portion 12 and the cover portion 13, is relatively thin and is secured within the mirror body 14 with its base portion 12 held by means of a fastening member 15. A groove 20 is provided along the edges of the cover portion 13, and a groove 20a of the same shape is provided on the back side of the mirror holder 2, whereby the flexible sealing cover 4 can be securely located by means of these grooves. The base portion 12 is fixed to the cover portion 13 by means of internally screw-threaded holes 21 in the base portion 12 into which screws 22 can be inserted. A worm 23 fixed to the output shaft of an electric motor, meshes with a worm wheel 24 which defines an opening 25 into which the adjusting nut 9 is inserted. A spherical bearing 26 is provided on the mirror holder 2 and into which bearing 26 the movable pivot 10 can be fitted. A sperical bearing 27 is similarly provided to receive the movable pivot 11.

Reference will now be made to guide means for controlling the direction of inclination of the mirror 1. The first guide means 6, as previously stated comprises a cruciform member and a cruciform groove, and the second guide means comprises openings, longer in the horizontal or vertical direction, into which the adjusting nuts 9 are respectively inserted.

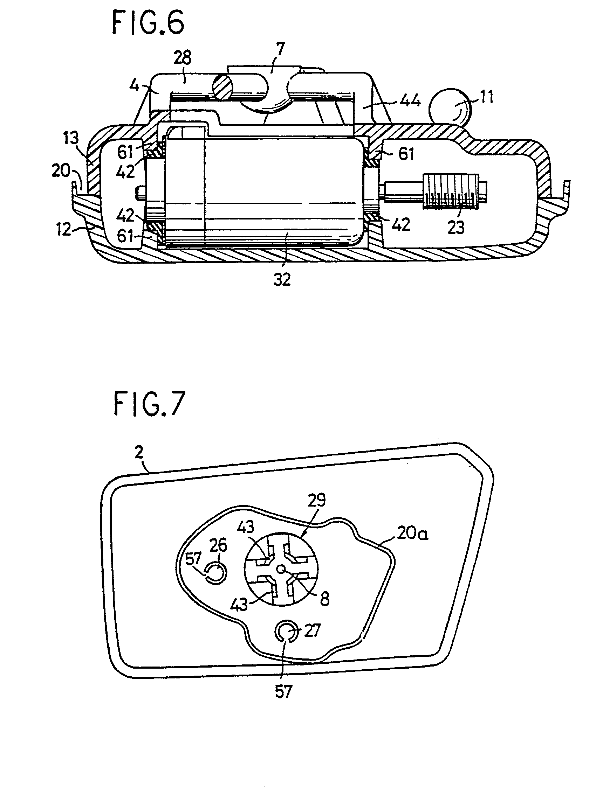

The guide means 6 comprises a cruciform member 28 provided on front of the cover portion 13 of the actuator unit housing 3 as shown in Figs. 1 and 6, and a cruciform groove 29 provided on the rear face of the mirror holder 2 as shown in Fig. 7, said cruciform member 28 being engageable with said cruciform groove 29 as shown in Fig. 5. The cruciform member 28 is provided at each of its ends with a leg 44 as shown in Figs. 5 and 6. The legs 44 space the cruciform member 28 and the spherical bearing 7 at its centre away from the front face of the actuator unit housing 3, and consequently the mirror 1 is spaced therefrom. The cruciform groove 29 (Fig. 7) comprises four members 43 each having a shape that in general resembles the letter "L" (hereinafter referred to as "L-shaped member", the L-shaped members 43 being disposed at spaced intervals around the central supporting pivot 8 of the mirror holder 2 so as to face one another. Four inside corners of these L-shaped members 43 constitute abutment members which support the outer surface of the spherical bearing 7 of the actuator unit housing 3. That is, as shown in Fig. 5, the inner surface of the spherical bearing 7 supports the stationary supporting pivot 8 of the mirror holder 2, and at the same time the outer surface thereof is supported by said inside corners of the L-shaped members 43. Since the mirror 1 is supported on the three pivots, that is, the stationary supporting pivot 8 and the two movable pivots 10, 11 and the cruciform member 28 is engaged within the cruciform groove 29, the direction of inclination, both horizontal and vertical, of the mirror 1 is properly controlled so as to ensure accurate angular adjustment of the mirror 1. Furthermore, even when the mirror 1 is subjected to vibration during the operation of the motor vehicle, the adjusted horizontal or vertical angle of the mirror 1 is maintained, and the mirror 1 is prevented from turning on the supporting pivot 8, that is, from being obliquely displaced.

The second guide means comprises two elongated openings 25 into which the adjusting nuts 9 are respectively inserted. As shown in Fig. 1, the two openings 25 extend through the cover portion 13 of the actuator unit housing 3, at a distance spaced from the spherical bearing 7, the openings 25 being located respectively on the intersecting horizontal and vertical axes, the opening 25 on said horizontal axis being longer in the horizontal direction, and the other opening 25 on said vertical axis being longer in the vertical direction. The adjusting nuts 9, when inserted into these elongated openings 25 are guided thereby as follows: When the adjusting nut 9 with its movable pivot 10 is inserted into the elongated opening 25 having its longer dimension in the horizontal direction and said nut 9 is moved back or forth but its actuator, it is guided so as to tilt in the horizontal direction according to the angle of inclination of the mirror 1. When the adjusting nut 9 with its movable pivot 11 inserted into its vertical opening 25 is moved back or forth by its actuator, it is guided so as to tilt in the vertical direction according to the angle of inclination of the mirror 1. The adjusting nuts 9 are not allowed to move or tilt in the direction at right angles to said respective directions.

When both the first guide means and the second guide means are employed, the direction of inclination of the mirror 1 is controlled very effectively.

Reference will now be made to an actuator unit for actuating the movable pivots 10 and 11. The actuator unit comprises two small electric motors 31, 32 arranged within the actuator unit housing 3, a worm 23 being fixed to the output shaft of each electric motor 31 or 32. Two pivot screws 48 are each disposed within the central hole of the worm wheel 24 of each of two worm mechanisms 30 so as to be in mechanical engagement therewith, and the two adjusting nuts 9 each provided at its upper end with the movable pivot 10 or 11 and at its lower end with catches 54 in operative engagement with screw thread 52 of each pivot screw 48. The actuator unit housing 3 consists of the hollow base portion 12 and the hollow cover portion 13, and has a shape which in general resembles a hollow drum. Therefore, if the electric motors 31, 32 are mounted directly in the actuator unit housing 3, the vibrations of the electric motors 31, 32 and the worm mechanisms 30 are magnified by the actuator unit housing 3, and give rise to undesirable resonance. Thus, according to the present invention, each of the electric motors 31, 32 is provided at its each end with a vibration-absorbing member 42 of an annular shape which is in contact with projecting portions 61 on the inside of the actuator unit housing 3, said vibration-absorbing members 42 absorbing the vibrations of the electric motors 31, 32 caused by their rotation thereby preventing said resonance (See Fig. 6).

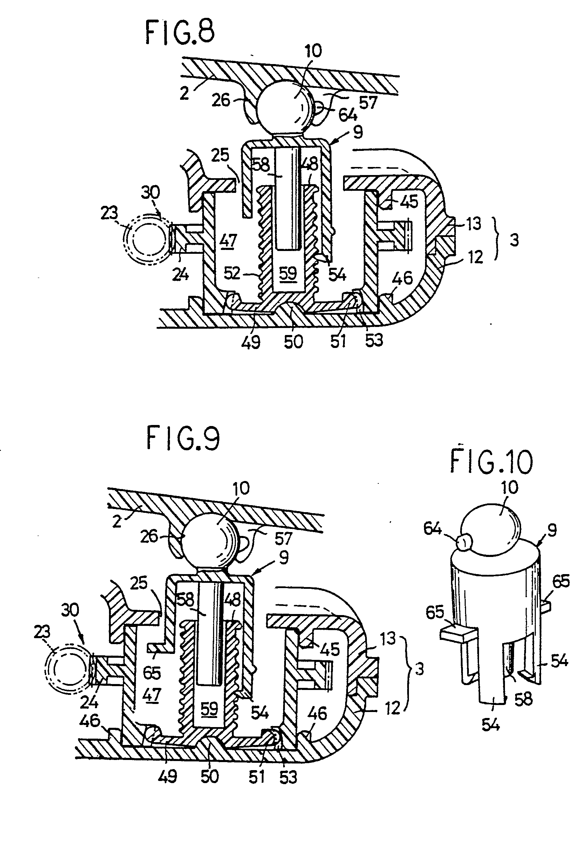

Fig. 8 shows, in detail, an assembly of the pivot screw 48 and the adjusting nut 9 within one of the worm wheels 24. It is to be noted that Fig. 8 is an enlarged sectional view showing the adjusting nut 9 for horizontal adjustment moved forward out of opening 25 from the position shown in Fig. 5. The worm wheel 24 is rotatably supported within annular projections 45 and 46 (Figs. 8 and 9) provided on opposed inner surfaces of the cover portion 13 and the base portion 12 respectively of the actuator unit housing 3. The cylindrical hub of the worm wheel 24 forms a central hole 47, within which the pivot screw 48 is pivotally disposed in mechanical engagement therewith. A semi-spherical projection 50 serving as a pivot is provided centrally of the annular projection 46 on the inner surface of the base portion 12, and a concavity corresponding to the semi-spherical projection 50 is formed centrally on the outwardly and upwardly inclined lower surface of a base portion 49 of the pivot screw 48, said semi-spherical projection 50 being fitted within said concavity. A convex surface 51 is formed on the circumference of the base portion 49 of the pivot screw 48, and a concave surface 53 conforming to the convex surface 51 is formed along the lower inside of the worm wheel 24, said convex surface 51 and concave surface 53 each being provided with interlocking projections and recesses so that the pivot screw 48 is mechanically connected with the worm wheel 24 and rotatable thereby without slipping. Since the pivot screw 48 is mounted on the semi-spherical projection 50 which serves as a pivot, the pivot screw 48 and the adjusting nut 9 can tilt as the spherical bearing 26 (27) moves along a circular arc when the mirror 1 is angularly adjusted.

Each adjusting nut 9 is provided in its lower portion with a plurality (three as shown in the drawings) of catches 54 each of which engages in the screw thread 52 of the pivot screw 48. The movable pivot 10 or 11 on top of each adjusting nut 9 is provided with a small projection 64 which is inserted into a slit 57 in the spherical bearing 26 or 27 of the mirror holder 2 so as to prevent rotation relative thereto (See Fig. 8). Therefore, when one of the pivot screws 48 is rotated in either direction through the worm mechanism 30 by the electric motor 31 or 32, one of the adjusting nuts 9 moves forward or backward out of or into its opening 25 and thereby the angle of inclination of the mirror 1 is changed within certain limits.

Each adjusting nut 9 is provided in its centre with a pin 58 which can be inserted into a central hole 59 of the pivot screw 48. In assembling the rear-view mirror, each adjusting nut 9 is attached as follows: Firstly, the worm wheel 24 and the pivot screw 48 are located in position in the base portion 12, and the cover portion 13 is fixed onto the base portion 12 by means of the screws 22. Then, the adjusting nut 9 is inserted into the opening 25 of the cover portion 13, and its catches 54 are engaged with the screw thread 52 of the pivot screw 48. Before the adjusting nut 9 is attached, however, the pivot screw 48 does not necessarily stand erect on the base portion 12 due to the fact that it is merely located on the semispherical projection 50. Furthermore, even if the pivot screw 48 does stand erect at that time, it is easily tilted even by a slight contact with the catches 54 of the adjusting nut 9. Therefore, it is difficult to engage the catches 54 properly with the threaded portion 52 of the pivot screw 48. According to this embodiment, however, the pin 58 provided in the centre of the adjusting nut 9 facilitates the aforesaid assembly work, because the end of the pin 58 is inserted into the central hole 59 of the pivot screw 48 and automatically aligns the pivot screw 48 with the adjusting nut 9 before the catches 54 come into contact with the screw thread 52 of the pivot screw 48.

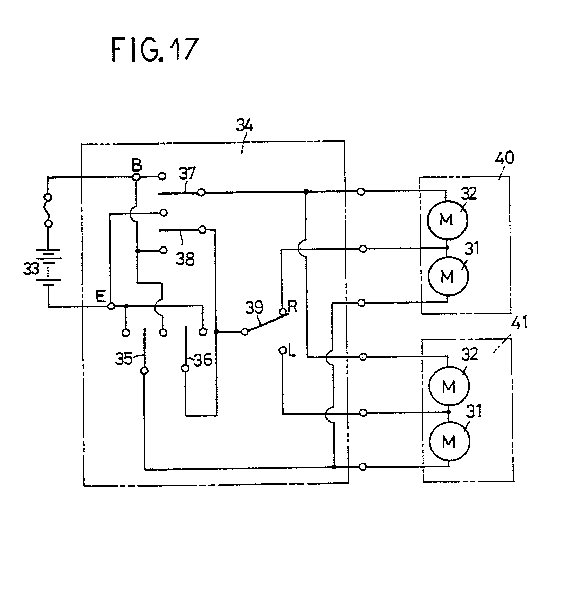

Fig. 17 shows an example of a driving circuit for the electric motors 31 and 32. The circuit includes a battery 33 as a power source, a mirror switch provided on the instrument panel or the like of the motor vehicle, a changeover switch 35, 36 for horizontal adjustment, a changeover switch 37, 38 for vertical adjustment, a changeover switch 39 for switching between a right-hand mirror 40 and a left-hand mirror 41. Each of the switches 35 to 38 comprise a movable contact provided on a control knob (not shown) and a fixed contact disposed on a printed circuit (not shown). The changeover switch 39 may be contained in the knob so as to move back and forth, or it may be an independent changeover switch disposed beside the knob. By means of these changeover switches, it is possible to choose which of the right-hand mirror 40 and the left-hand mirror 41 is to be operated, and then adjust its angle horizontally and/or vertically in a desired manner by rotating the electric motor or motors in either direction.

As shown in Figs. 1 to 3, the mirror body 14 of this embodiment is made thin so that it is less liable to collide again after being folded inward by a first collision. The actuator unit housing 3 is fixed by means of screws to the fastening member 15 within the mirror body 14. The fastening member 15 is provided on its upper portion with a retaining portion 71 having a flange, to which one end of a coiled spring 70 is fastened, the other end thereof being fastened through the intermediary of a link 76 to a bracket 77 on a stay 72. The mirror body 14 is connected to the stay 72 by a double-action link 73 having two hinges 74 and 75.

The operation of the electric mirror angle adjusting device of the invention will now be described.

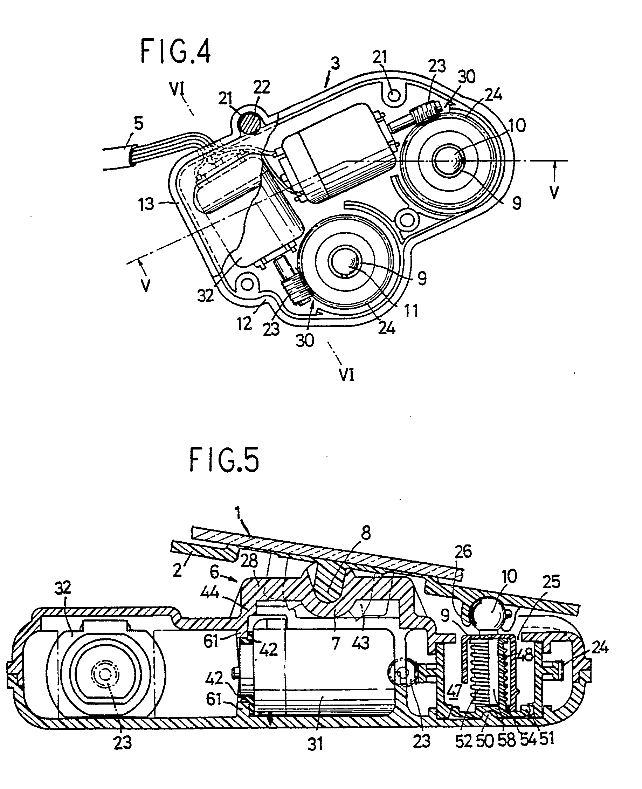

To use the device, it is necessary, first of all, to choose which of the right-hand mirror 40 and the left-hand mirror 41 is to be angularly adjusted, and manipulate the changeover switch 39 according thereto. If, for example, the changeover switch 39 is switched to the right side (R side) as shown in Fig. 17 and the changeover switches 37, 38 for vertical adjustment are pushed upward, the electric motor 32 for the right-hand mirror 40 is energized and starts rotating in the normal direction. Then, the electric motor 32 rotates its worm 23 and the associated worm wheel 24 as shown best in Fig. 4, and the worm wheel 24 rotates the pivot screw 48 which is in engagement therewith. On rotation of the pivot screw 48, the adjusting nut 9 with its movable pivot 11 for vertical adjustment is moved forward out of its opening 25 because its catches 54 are in engagement with the screw-thread 52 of the pivot screw 48. On the forward movement of the movable pivot 11, the right-hand mirror 40 is pivoted about its supporting pivot 8 and thus its vertical angle is adjusted. When the desired angle of the right-hand mirror 40 is obtained, the changeover switches 37, 38 are returned to their neutral positions. If the changeover switches 37, 38 are pushed downward, the electric motor 32 rotates in the reverse direction and moves the adjusting nut 9 backward into its opening 25 so as to adjust the right-hand mirror 40 in the opposite direction. In order to make horizontal adjustment of the right-hand mirror 40, the changeover switches 37, 38 are kept in neutral and the changeover switches 35, 36 are pushed to the right or left in Fig. 23 to rotate the electric motor 31 in the normal or reverse direction. Then, the adjusting nut 9 with its movable pivot 10 for horizontal adjustment is moved forward or backward in the same way as described above so as to effect horizontal adjustment of the right-hand mirror 40. In order to effect the horizontal or vertical adjustment of the left-hand mirror 41, the changeover switch 39 is switched to the left side (L side) in Fig. 23 and then the same procedures as above are carried out.

Apart from the automatic adjustment described above, it is also possible to adjust manually the angle of each mirror. If the front face of the mirror is pushed by hand at a position away from the supporting pivot 8, the catches 54 of the adjusting nut 9 are pivoted out of engagement with the screw thread 52 of the pivot screw 48 by the applied manual force so that they can move forward or backward along the screw thread 52 of the pivot screw 48. Thus, the adjusting nut 9 moves forward or backward and pivots the mirror about its supporting pivot 8.

Fig. 10 shows a modified example of the adjusting nut 9. In this example, the adjusting nut 9 is provided adjacent the roots of its catches 54 with a plurality (two in Fig. 10) of projections 65 which extend outward beyond the perimeter of the opening 25 so as to prevent the adjusting nut 9 from coming out of the opening 25. When the mirror 1 is detached from the actuator unit housing 3 for the readjustment of the mirror setting, the adjusting nut 9 without such projections 65 is liable to be pulled away from its pivot screw 48, and therefore it has to be re-engaged with the pivot screw 48. In this modified example, however, even when the mirror 1 is detached from the actuator unit housing 3, the adjusting nut 9 is not disengaged from its pivot screw 48 because the catches 65 contact the inner surface of the opening 25 (See Fig. 9). This feature facilitates the assembly and readjustment of the rear-view mirror.

In Figs. 11 to 14, a second embodiment of the invention is shown which incorporates an actuator unit housing 3 having a shape which is modified in comparison with that of the above-described first embodiment. In the second embodiment, the actuator unit housing 3 is thin and has a shape of a lozenge, the diagonals of which coincide with the aforesaid horizontal and vertical axes, the vertexes of said lozenge being rounded off.

The actuator unit housing 3 is fixed in position by means of holes 16 engageable with the fastening member 15 fixed within the mirror body 14, screw holes 17, and an internally threaded hole 19 into which a setscrew 18 is inserted from below. The base portion 12 and the cover portion 13 of the actuator unit housing 3 are fixed to each other by means of the screws 22 inserted into the internally threaded holes 21 in the same manner as in the embodiment described with reference to Figs. 1 to 8. As in the previous embodiment also, the guide means 6 comprises cross-shaped member 28 provided on the front of the actuator unit housing 3 and cross-shaped groove 29 provided on the mirror body 14.

Each adjusting nut 9 of the present embodiment, unlike that of the previous embodiment, is provided on its sides with a pair of fins 55 as shown in Figs. 15 and 16. Each opening 25 into which each adjusting nut 9 is inserted comprises a circular hole 25a and a pair of U-shaped notches 25b provided along the diameter of the hole 25a. The opening 25 on the aforesaid horizontal axis has its U-shaped notches 25b disposed along the horizontal axis, and the opening 25 on the aforesaid vertical axis has its U-shaped notches 25b disposed along the vertical axis. Each of the U-shaped notches 25b is provided on its top with a fin guide 56 of U-shaped section for guiding each fin 55 of the adjusting nut 9. Since the main body of each adjusting nut 9 is inserted into the circular hole 25a and its fins 55 are loosely guided within the fin guides 56, each adjusting nut 9 smoothly tilts as the spherical bearing 26 or 27 moves along a circular arc during operation. Also, since the fins 55 and the fin guides 56 prevent rotation of the adjusting nuts 9, it is not necessary to provide the small projection 64 on the movable pivots 10, 11 as in the previous embodiment.

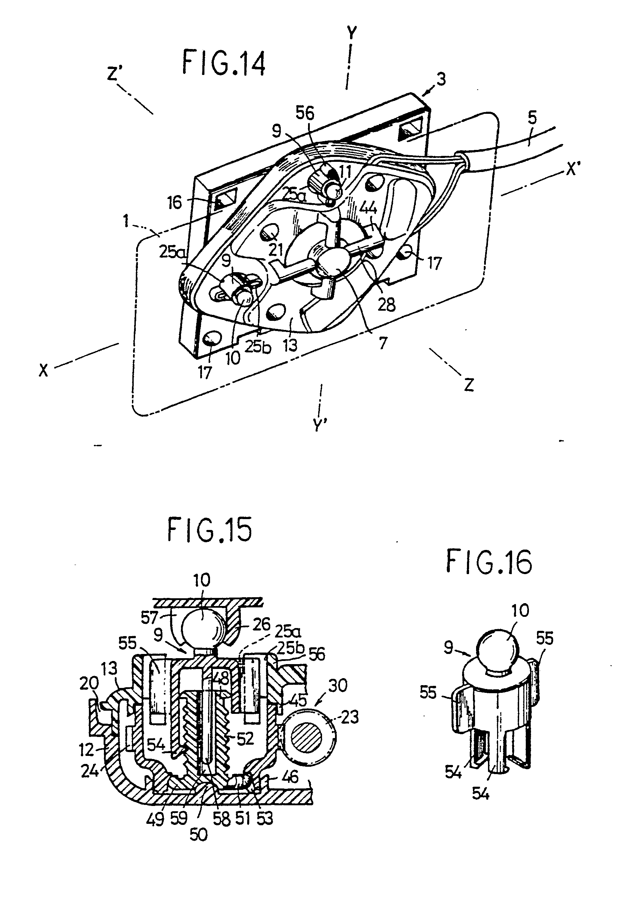

In this embodiment, the operation of adjusting the angle of the mirror 1 is the same as in the previous embodiment, that is, it is adjusted by moving the movable pivots 10, 11 forwards or backwards by means of their actuators. Therefore, the operation will not be described further. Since in the present embodiment, the actuator unit housing 3 has a shape of a lozenge whose vertexes are rounded off, the horizontal and vertical adjustments of the mirror 1 can be performed over a wider range than in the previous embodiment. Particularly because the four sides of the lozenge are inclined at an angle of approximately 45 degrees, the actuator unit housing 3 allows the mirror 1 to incline sufficiently in any direction that is a combination of a horizontal direction X—X' or a vertical direction Y—Y' and a direction Z—Z' as indicated in Fig. 14. As a result, the mirror 1 can be inclined three-dimensionally over a much wider range.

The present invention affords a number of advantages. For example, the actuator unit housing containing the two actuators is relatively thin so that it can be easily attached within a small and thin rear-view mirror such as a door mirror, and the horizontal and vertical angles of the mirror can be adjusted over a wide range. Also, because the guide means for controlling the direction of inclination of the mirror are provided between the mirror holder and the actuator unit housing, the inclination of the mirror is accurately maintained and the mirror is prevented from being obliquely displaced during the operation of the motor vehicle. Furthermore, because the actuator unit comprises two electric motors and two worm mechanisms respectively in direct engagement therewith, unlike prior art devices whose actuator unit comprises a single electric motor and a solenoid-type clutch, the present invention has the advantage that the angle of the mirror can be adjusted surely and quickly.

**Claims**

1. An electric mirror angle adjusting device comprising an actuator unit housing (3) containing an actuator unit including two actuators (31, 32), a mirror holder (2) pivotally connected adjacent its central portion to said actuator housing (3), two adjustment members (9) each having a movable pivot (10, 11), said adjusting members (9) being respectively movable by said actuators so as to adjust the horizontal and vertical angles of a mirror (1), and guide means (6, 25) for controlling the direction of horizontal and/or vertical inclination of said mirror (1), the mirror (1) being movable under the control of said guide means about a central pivot (8) mounted in a spherical bearing (7), characterised in that said guide means comprise a cruciform member (28) disposed on said actuator unit housing (3), having adjacent its centre said spherical bearing (7) into which said supporting pivot (8) is fitted, said cruciform member (28) extending along the horizontal and vertical axes of said mirror (1) and a cruciform groove (29) provided with said supporting pivot (8) on said mirror holder (2) so as to engage with said cruciform member (28), the outer surface of said spherical bearing (7) being supported by internal abutment members (43) forming an outer bearing in said cruciform groove (29).

2. An electric mirror angle adjusting device as claimed in claim 1, wherein said actuator unit comprises two electric motors (31, 32) located within said actuator unit housing (3), two worm mechanisms (30) respectively driven by said electric motors, two pivot screws (48) respectively disposed within worm wheels (24) in said worm mechanisms (30) so as to engage therewith, and said adjusting members (9) respectively engaging said pivot screws (48).

3. An electric mirror angle adjusting device as claimed in claim 2, wherein said electric motors (31, 32) are mounted within said actuator unit housing (3) through the intermediary of vibration absorbing members (42) so as to prevent resonating of said actuator unit housing (3) during the operation of said electric motors (31, 32).

4. A mirror adjusting device as claimed in claim 2 or 3, wherein each of said adjusting members (9) is provided at its lower end with a plurality of catch elements (54) for engaging with one of said pivot screws (48).

5. A mirror adjusting device as claimed in any of claims 1 to 4, in which each adjusting member (9) is provided with projections (65) adapted to extend outward beyond the perimeter of an opening (25) of the unit housing (3) so as to prevent the adjusting member (9) from coming out of this opening (25).

## Revendications

1. Dispositif pour ajuster électriquement l'angle d'un miroir, comprenant un logement de dispositif de manoeuvre (3) contenant le dispositif de manoeuvre comportant deux éléments d'actionnement (31, 32), un porte-miroir (2) relié de façon pivotante à proximité de sa partie centrale audit logement de dispositif de manoeuvre (3), deux éléments de réglage (9) comportant chacun un pivot mobile (10, 11), lesdits éléments de réglage (9) pouvant être respectivement déplacés par lesdits éléments d'actionnement de manière à ajuster les angles horizontal et vertical d'un miroir (1), et des moyens de guidage (6, 25) pour commander la direction de l'inclinaison horizontale et/ou verticale dudit miroir (1), le miroir pouvant être déplacé sous la commande desdits moyens de guidage autour d'un pivot central (8) monté dans un palier sphérique (7), caractérisé en ce que lesdits moyens de guidage comprennent un organe cruciforme (28) disposé sur ledit logement de dispositif de manoeuvre (3), comportant à proximité de son centre ledit palier sphérique (7) dans lequel ledit pivot de support (8) est fixé, ledit organe cruciforme (28) s'étendant le long des axes horizontal et vertical dudit miroir (1) et une gorge cruciforme (29) étant prévue avec le pivot de support (8) sur le porte-miroir (2) de manière à venir en engagement avec l'organe cruciforme (28), la surface externe dudit palier sphérique (7) étant supportée par des éléments de butée internes (43) formant un palier externe dans ladite gorge cruciforme (29).

2. Dispositif pour adjuster électriquement l'angle d'un miroir selon la revendication 1, caractérisé en ce que ledit dispositif de manoeuvre comprend deux moteurs électriques (31, 32) disposés à l'intérieur dudit logement de dispositif de manoeuvre (3), deux mécanismes à vis sans fin (30) entraînés respectivement par lesdits moteurs électriques, deux vis de pivotement (48) disposées respectivement à l'intérieur des roues de vis sans fin (24) dans lesdits mécanismes à vis sans fin (23a) de manière à être en engagement avec eux, et lesdits éléments de réglage (9) étant respectivement en engagement avec lesdites vis de pivotement (48).

3. Dispositif pour ajuster électriquement l'angle d'un miroir selon la revendication 2, caractérisé en ce que lesdits moteurs électriques (31, 32) sont montés à l'intérieur dudit logement de dispositif de manoeuvre (3) par l'intermédiaire d'éléments d'absorption de vibrations (42) de façon à éviter la résonance dudit logement de dispositif de manoeuvre pendant le fonctionnement desdits moteurs électriques (31, 32).

4. Dispositif pour ajuster électriquement l'angle d'un miroir selon la revendication 2 ou 3, caractérisé en ce que chacun desdits éléments de réglage (9) comprend à son extrémité inférieure un ensemble d'éléments en crochet (54) destinés à venir en engagement avec l'une desdites vis de pivotement (48).

5. Dispositif pour adjuster électriquement l'angle d'un miroir selon l'une quelconque des revendications 1 à 4, caractérisé en ce que chaque écrou de réglage (9) est muni de saillies (65) aptes à s'étendre vers l'extérieur au-delà du périmètre d'une ouverture (25) du logement (3) du dispositif de façon à éviter que l'élément de réglage (9) sorte de cette ouverture (25).

## Patentansprüche

1. Elektrisch betriebene Spiegelwinkel-Einstelleinrichtung mit einem Gehäuse (3) für eine Antriebseinheit, in welchem eine Antriebseinheit angeordnet ist, welche zwei Antriebsvorrichtungen (31, 32) aufweist, mit einem Spiegelhalter (2), welcher nahe seines Mittenbereiches schwenkbeweglich mit dem Gehäuse (3) für die Antriebseinheit verbunden ist, mit zwei Einstellvorrichtungen (9), von denen jede einen beweglichen Schwenkpunkt (10, 11) aufweist, wobei die Einstellvorrichtungen (9) jeweils von den Antriebsvorrichtungen bewegbar sind, um die horizontalen und vertikalen Winkel eines Spiegels (1) einzustellen, und mit Führungsvorrichtungen (6, 25) zur Steuerung der Richtung der horizontalen und/oder vertikalen Neigung des Spiegels (1), wobei der Spiegel (1) unter Steuerung der Führungsvorrichtungen um einen mittigen Drehpunkt beweglich ist, der in einem gewölbten Lager (7) angeordnet ist, dadurch gekennzeichnet, daß die Führungsvorrichtung ein kreuzförmiges Bauteil (28) aufweist, welches in dem Gehäuse (3) für die Antriebseinheit angeordnet ist und im Nahbereich seiner Mitte das gewölbte Lager (7) aufweist, in welchem der Träger-Drehpunkt (8) eingesetzt ist; daß sich das kreuzförmige Bauteil (28) entlang der horizontalen und vertikalen Achsen des Spiegels (1) erstreckt, wobei eine kreuzförmige Vertiefung (29) mit dem Drehpunkt (8) an dem Spiegelhalter (2) derart angeordnet ist, daß sie mit dem kreuzförmigen Bauteil (28) in Anlage ist; und daß die äußere Oberfläche des gewölbten Lagers (7) von einem inneren Anschlagbauteil (43) gestützt wird, welches ein äußeres Lager in der kreuzförmigen Vertiefung (29) bildet.

2. Einstelleinrichtung nach Anspruch 1, dadurch gekennzeichnet, daß die Antriebsvorrichtung zwei Elektromotoren (31, 32) aufweist, welche in dem Gehäuse (3) für die Antriebseinheit angeordnet sind; daß zwei Schneckenradmechanismen (30) entsprechend durch die Elektromotoren angetrieben werden; daß schwenkbare Schrauben (48) innerhalb von Schneckenrädern (24) der Schwenkradmechanismus (30) derart angeordnet sind, daß sie mit diesen in Anlage sind; und daß die Einstellvorrichtungen (9) mit den schwenkbaren Schrauben (48) jeweils in Anlage sind.

3. Einstelleinrichtung nach Anspruch 2, dadurch gekennzeichnet, daß die Elektromotoren (31, 32) unter Verwendung von Vibrationsdämpfungs-Bauteilen (42) innerhalb des Gehäuses (3) für die Antriebseinheit derart angeordnet sind, daß Resonanzwirkungen auf das Gehäuse (3) für die Antriebseinheit während der Arbeitsweise der Elektromotoren (31, 32) verhindert werden.

4. Einstelleinrichtung nach Anspruch 2 oder 3, dadurch gekennzeichnet, daß jede der Einstellvorrichtungen (9) an ihrem unteren Ende eine Mehrzahl von Eingriffselementen (54) aufweist, um mit einer der schwenkbaren Schrauben (48) in Eingriff zu gelangen.

5. Einstelleinrichtung nach einem der Ansprüche 1 bis 4, dadurch gekennzeichnet, daß die Einstellvorrichtungen (9) Vorsprünge (65) aufweisen, die sich über den Innendurchmesser einer Öffnung (25) des Gehäuses (3) nach außen erstrecken, um zu verhindern, daß die Einstellvorrichtungen (9) sich aus dieser Öffnung (25) herausbewegen können.

FIG.1

FIG.3

FIG.2

# FIG.4

# FIG.5

0 059 073

# FIG.6

# FIG.7

3

FIG.8

FIG.9

FIG.10

# FIG.11

FIG.12

FIG.13

FIG.14

FIG.15

FIG.16

# FIG.17